# NEUE EUROPÄISCHE PATENTSCHRIFT

(11) **EP 1 220 769 B2**
(45) Veröffentlichungstag und Bekanntmachung des Hinweises auf die Entscheidung über den Einspruch: **17.05.2006**
(45) Hinweis auf die Patenterteilung: 23.04.2003
(21) Anmeldenummer: 00963976.6
(22) Anmeldetag: 07.09.2000
(51) Int. Cl.: B60R 21/34, E05D 11/00

(54) **VORDERBAU FÜR EIN KRAFTFAHRZEUG**
FRONT STRUCTURE FOR A MOTOR VEHICLE
STRUCTURE FRONTALE POUR AUTOMOBILE

(30) Priorität: 08.09.1999 DE 19942731
(43) Veröffentlichungstag der Anmeldung: 10.07.2002
(73) Patentinhaber: ADAM OPEL AG, 65423 Rüsselsheim (DE)
(72) Erfinder: KRETH, Laszlo, 64319 Pfungstadt (DE); RENNEISEN, Ingo, 65239 Hochheim (DE)
(86) Internationale Anmeldenummer: PCT/DE2000/003094
(87) Internationale Veröffentlichungsnummer: WO 2001/017828

(56) Entgegenhaltungen:
- EP-A- 0 926 018
- DE-A1- 2 934 060
- DE-C2- 3 047 969
- US-A- 3 643 755
- PATENT ABSTRACTS OF JAPAN vol. 1998, no. 14, 31. Dezember 1998 (1998-12-31) & JP 10 258773 A (MITSUBISHI MOTORS CORP), 29. September 1998 (1998-09-29)
- PATENT ABSTRACTS OF JAPAN vol. 016, no. 557 (M-1340), 27. November 1992 (1992-11-27) & JP 04 212677 A (NISSAN MOTOR CO LTD), 4. August 1992 (1992-08-04)

## Beschreibung

Die Erfindung betrifft einen Vorderbau für ein Kraftfahrzeug mit einer schwenkbaren Haube, insbesondere einer Motorhaube, welche in einergeschlossenen Lage an der Karosserie anliegt.

Ein Vorderbau ist beispielsweise aus der EP 0 644 104 B1 bekannt. Bei diesem Vorderbau ist ein oberhalb einer Stoßstange befindliches Vorderteil mit einem Scharnier an einem Karosserieteil des Kraftfahrzeuges befestigt. Die Schwenkbewegung des Vorderteils gegenüber dem Karosserieteil wird im Grundzustand von einem Scherbolzen verhindert. Die Haube wird mittels eines Scharniers an dem Vorderteil gehalten und hat an seinem dem Vorderteil abgewandten Ende eine horizontale Führung in einem weiteren Karosserieteil. Bei einem Zusammenstoß des Kraftfahrzeuges beispielsweise mit einem Fußgänger wird der Scherstift abgeschert und das Vorderteil nach hinten geschwenkt. Dabei wird die Haube in der Führung geführt.

Nachteilig bei dem bekannten Vorderbau ist, dass bei einer senkrechten Belastung der Haube, beispielsweise durch einen Kopfaufprall des Fußgängers, die Haube eine hohe Stabilität aufweist. Hierdurch können hohe Belastungen des Kopfes des Fußgängers entstehen.

Ein weiterer Vorderbau ist schon aus US 3 643 755 A und EP 0 926 018 A bekannt. Ein gattungsgemäßer vorderban ist aus der JP-A-102 58 773 bekannt.

Der Erfindung liegt das Problem zugrunde, einen Vorderbau der eingangs genannten Art so zu gestalten, dass ein Fußgänger bei einem Aufprall auf die Haube ein besonders geringes Verletzungsrisiko hat.

Dieses Problem wird durch die Merkmale des Anspruchs 1 gelöst.

Durch diese Gestaltung gibt die Haube bei einer vorgesehenen Belastungsstärke, beispielsweise bei einem Aufprall des Kopfes eines Fußgängers, in vertikaler Richtung nach. In Abhängigkeit von der vorgesehenen Belastungsstärke und dem Unterbau unterhalb der Haube kann diese sich in einer Seite oder vollständig nach unten bewegen oder Insbesondere von dem Kopf des Fußgängers eingedrückt werden. Im mittleren Bereich kann die Haube mit Abstand zu darunter angeordneten Trägern und einer Brennkraftmaschine des Kraftfahrzeuges angeordnet sein. Die Belastung des Kopfes des Fußgängers wird hierdurch besonders gering gehalten. Ein weiterer Vorteil des erfindungsgemä-Ben Vorderbaus besteht darin, dass er sich unabhängig von der vorgesehenen Belastungsstärke in vertikaler Richtung auf eine vorgesehene Stabilität bei einem Frontalcrash beispielsweise mit einem weiteren Kraftfahrzeug gestalten lässt, da hier die auftretenden Kräfte horizontal in den Vorderbau eingeleitet werden. Der erfindungsgemäße Vorderbau ist zudem nicht auf den Einsatz von in Fahrtrichtung des Kraftfahrzeuges schwenkbaren Hauben beschränkt.

Um bei einer vertikalen Belastung im Randbereich nachgeben zu können, könnte die Haube beispielsweise kraftschlüssig an einem angrenzenden Karosserieteil gehalten sein. Alternativ dazu könnte sich eine Halterung der Haube an dem Karosserieteil bei ihrer Belastung in vertikaler Richtung verformen.

In der Regel wird die Haube von Scharnieren und einem den Scharnieren gegenüberliegend angeordneten Verschluss gehalten. Dabei gestaltet sich der erfindungsgemäße Vorderbau konstruktiv besonders einfach, wenn die Mittel zur Lösung des Formschlusses im Bereich eines die Haube an dem Karosserieteil anlenkenden Scharniers angeordnet sind. Bei entgegen der. Fahrtrichtung schwenkbaren Hauben führt diese Gestaltung zudem zu einem besonders geringen Verletzungsrisiko für einen erwachsenen Fußgänger, da der Aufprall des Kopfes meist am Ende der Haube und damit im Bereich der Scharniere auftritt.

Die Montage des erfindungsgemäßen Vorderbaus gestaltet sich besonders einfach, wenn das Halteelement zur Verbindung eines das Scharnier halternden Scharnierträgers mit einem daran angrenzenden Bauteil gestaltet ist. Im einfachsten Fall bildet das Halteelement einen Teil einer Lagerung des Schamiers.

Die vorgesehene Belastungsstärke, bei der das Halteelement den Formschluss lösen soll, lässt sich gemäß einer anderen vorteilhaften Weiterbildung der Erfindung einfach festlegen, wenn die von dem Halteelement verbundenen Bauteile zueinander verschiebbar angeordnet sind und wenn das Halteelement quer zu der Verschiebungsrichtung angeordnet ist. Durch diese Gestaltung schert das Halteelement beim Aufprall des Fußgängers auf die Haube ab.

Eine vorgesehene vertikale Bewegung der Haube lässt sich gemäß einer anderen vorteilhaften Weiterbildung der Erfindung einfach festlegen, wenn die Bewegung der Haube nach einem Lösen des Formschlusses des Halteteils an einem feststehenden Bauteil der Karosserie geführt ist. Da die Führung erfindungsgemäß eine vertikale Bewegung der Haube zulässt, können Kräfte im Falle eines Frontal- oder Offsetcrashes von der Führung abgestütztwerden. Durch diese Gestaltung des erfindungsgemäßen Vorderbaus wird zudem verhindert, dass sich die Haube in dem Karosserieteil verhakt.

Eine Führung der Haube gestaltet sich gemäß einer anderen vorteilhaften Weiterbildung der Erfindung besonders kostengünstig, wenn sie ein von dem Halteelement gehaltenes Formteil seitlich umgreifendes Blechteil aufweist.

Die Haube ist gemäß einer anderen vorteilhaften Weiterbildung der Erfindung nach einer Überschreitung der vorgesehenen Belastungsstärke zuverlässig geführt, wenn die Führung hülsenförmig, zur Aufnahme von mittels des Halteelementes gehaltenen Gleitbolzen gestaltet ist. Weiterhin lässt sich hierdurch eine Reibkraft zwischen dem Gleitbolzen und der Führung einfach einstellen.

Eine besonders weite vertikale Bewegung insbesondere von Randbereichen der Haube könnte zu scharfen Kanten des Karosserieteils beim Aufprall des Fußgängersführen.

Die Haube ist gemäß einer anderen vorteilhaften Weiterbildung der Erfindung nach einem Lösen des Formschlusses zuverlässig mit dem Kraftfahrzeug verbunden, wenn der Scharnierträger an der Haube angelenkte Scharnierarme unmittelbar lagert und wenn das Halteelement zur Halterung des den Schwenkbereich der Scharnierarme begrenzenden Anschlags gestaltet ist. Nach einer Zerstörung des Halteelementes wird die Haube zudem durch die Scharnierarme geführt.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: einen rechten Teilbereich eines erfindungsgemäßen Vorderbaus eines Kraftfahrzeuges im Querschnitt,
- Fig. 2: den Vorderbau aus Fig. 1 nach einer Bewegung einer Haube vertikal nach unten,
- Fig. 3: eine Seitenansicht eines Scharniers der Haube aus Figur 1 von Position III aus,
- Fig. 4: eine Schnittdarstellung durch das Scharnier aus Figur 3 entlang der Linie IV-IV,
- Fig. 5: eine weitere Ausführungsform eines Scharniers für die Haube aus Figur 1,
- Fig. 6: eine Schnittdarstellung durch das Scharnier aus Figur 5 entlang der Linie VI-VI,
- Fig. 7: eine weitere Ausführungsform eines Scharniers für die Haube aus Figur 1.

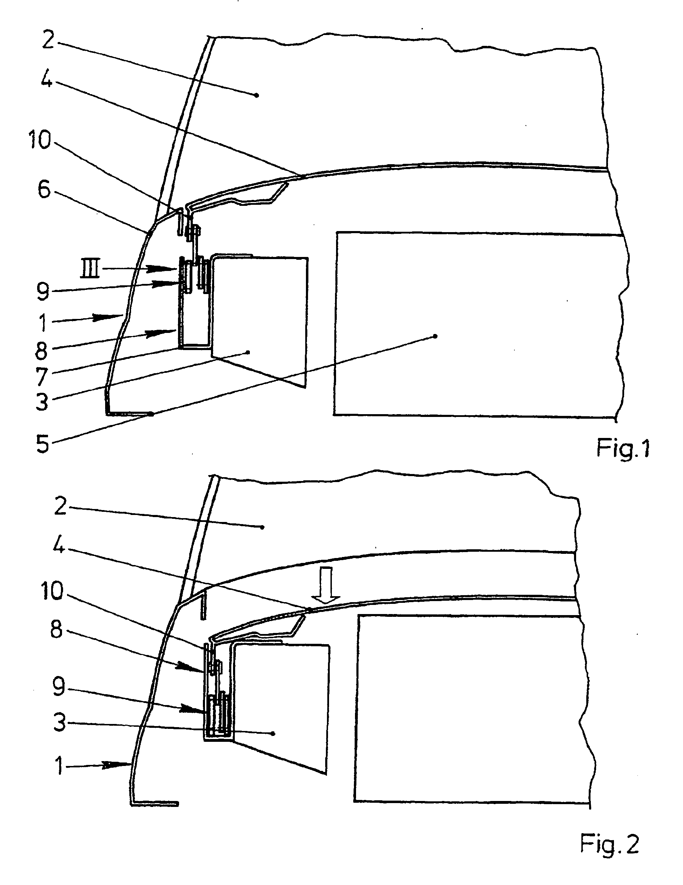

Figur 1 zeigt einen rechten Teilbereich eines Vorderbaus 1 eines Kraftfahrzeuges im Querschnitt und eine sich an den Vorderbau 1 anschließende Frontscheibe 2. Der Vorderbau 1 hat eine schwenkbar an einem Karosserieteil 3 des Kraftfahrzeuges angelenkte Haube 4. Die Haube 4 überdeckt in ihrer eingezeichneten Lage eine schematisch dargestellte Brennkraftmaschine 5 des Kraftfahrzeuges. Seitlich wird der Vorderbau 1 von einem Kotflügel 6 begrenzt. Auf dem Karosserieteil 3 ist ein Scharnierträger 7 mit einer vertikalen Führung 8 befestigt. In der Führung 8 wird ein mit der Haube 4 verbundenes Scharnier9 formschlüssig gehalten. Zur Verbindung mit dem Scharnier 9 hat die Haube 4 ein vertikal angeordnetes Halteblech 10.

Bei einer vorgesehenen vertikalen Belastung der Haube 4 löst sich der Formschluss zwischen der Führung 8 und dem Scharnier 9 und das Scharnier 9 gleitet entlang der Führung 8 nach unten. Hierdurch bewegt sich die Haube 4 ebenfalls nach unten. Diese Lage der Haube 4 ist in Figur 2 dargestellt. In Figur 2 ist zudem die Belastungsrichtung der Haube 4 mit einem Doppelpfeil angedeutet. Eine solche Belastung entsteht, wenn beispielsweise ein Fußgänger von dem Kraftfahrzeug angefahren wird und mit dem Kopf auf der Haube 4 aufschlägt.

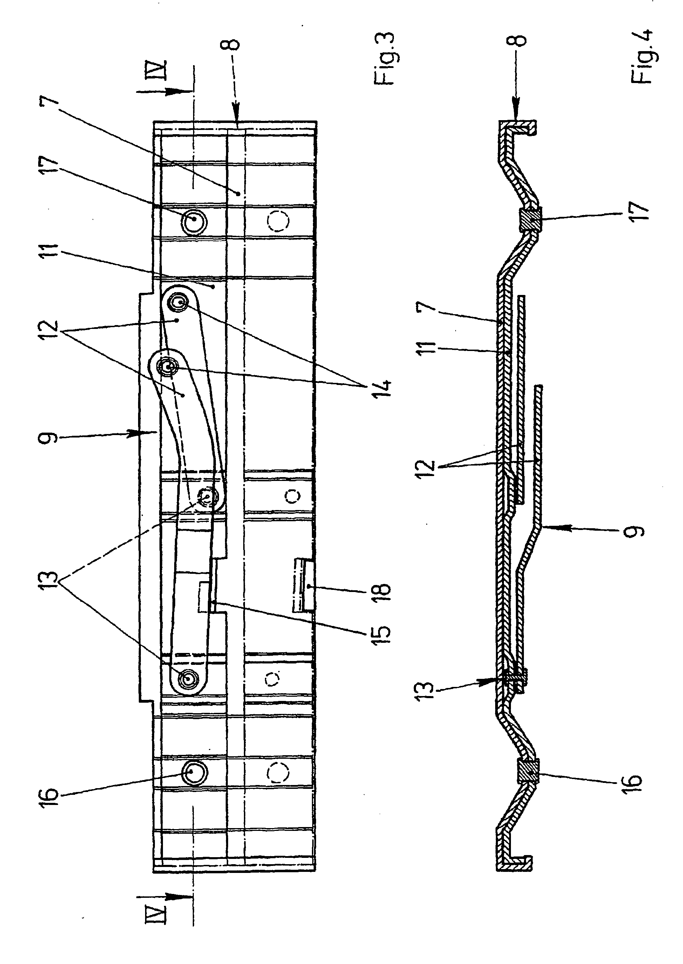

Figur 3 zeigt das Scharnier 9 aus Figur 1 in einer Seitenansicht von Position III. Das Scharnier 9 hat ein seitlich von dem Scharnierträger 7 umgriffenes Formteil 11. Auf dem Formteil 11 sind Scharnierarme 12 schwenkbar gelagert. Zur Vereinfachung der Zeichnung ist das Halteblech 10 aus Figur 1 nicht dargestellt. Die Scharnierarme 12 weisen Lagerungen 13 in dem Formteil 11 und Lagerbohrungen 14 für Lagerungen mit dem in Figur 1 dargestellten Halteblech 10 auf. Der Schwenkbereich einer der Scharnierarme 12 um die Lagerungen 13 wird durch einen an dem Formteil 11 angeordneten Anschlag 15 begrenzt. Das Formteil 11 ist mittels zweier Halteelemente 16, 17 mit dem Scharnierträger 7 verbunden. Bei der in Figur 2 dargestellten vertikalen Belastung der Haube 4 werden die Scharnierarme 12 nach unten hin bewegt, bis der eine Scharnierarm 12 gegen den Anschlag 15 gelangt. Die Halteelemente 16, 17 werden dabei auf Scherung beansprucht. Oberhalb einer durch Material und Abmessungen der Halteelemente 16, 17 festgelegten Belastungsstärke der Haube 4 werden die Halteelemente 16, 17 abgeschert und das Formteil 11 gleitet zusammen mit den Scharnierarmen 12 entlang der Führung 8 nach unten. Dabei gelangt die Haube 4 in die in Figur 2 dargestellte Lage. Der Scharnierträger 7 hat ebenfalls einen Anschlag 18 zur Begrenzung dervertikalen Bewegung des Formteils 11. Zur Verdeutlichung ist in der Zeichnung das Formteil 11 nach einem Abscheren der Halteelemente 16, 17 strichpunktiert dargestellt.

Figur 4 zeigt in einer Schnittdarstellung durch das Scharnier 9 aus Figur3, dass die Halteelemente 16, 17 als Nieten ausgebildet sind. Hierbei ist zu erkennen, dass der Scharnierträger 7, das Formteil 11 und die Scharnierarme 12 aus umgeformtem Blech gefertigt sind.

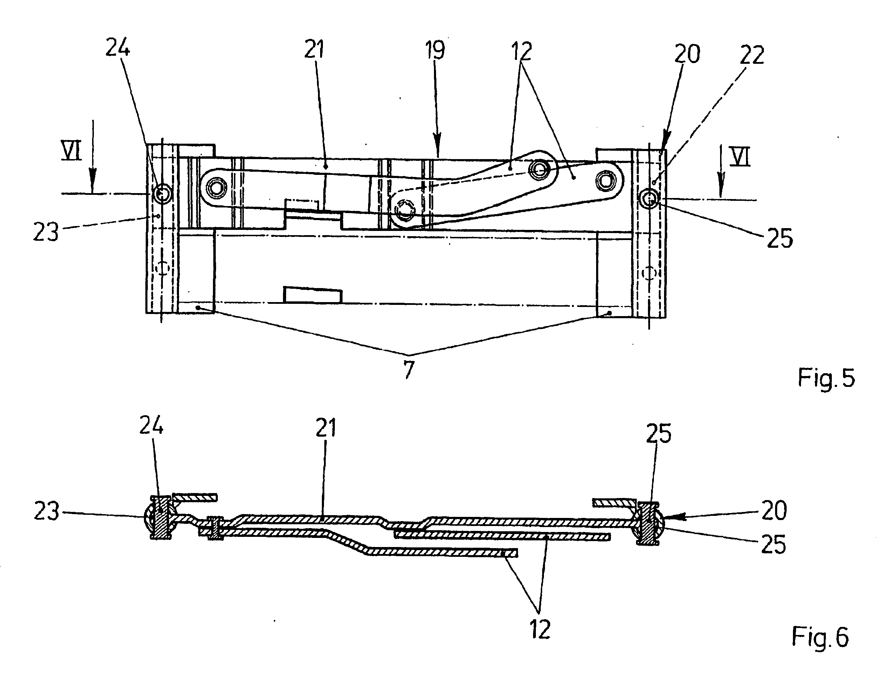

Figur 5 zeigt ein Scharnier 19 in einer Seitenansicht. Dieses Scharnier 19 unterscheidet sich von dem Scharnier 9 aus Figur 3 vor allem dadurch, dass der Scharnierträger 7 eine hülsenförmig gestaltete Führung 20 für ein die Scharnierarme 12 halterndes Formteil 21 aufweist. Wie Figur 6 in einer Schnittdarstellung durch das Scharnier 19 aus Figur 5 entlang der Linie VI-VI zeigt, hat das Formteil 21 in die hülsenförmige Führung 20 eindringende Gleitbolzen 22, 23. Die Führung 20 und die Gleitbolzen 22, 23 werden von Halteelementen 24, 25 durchdrungen. Die Halteelemente 24, 25 werden bei einer vertikalen Belastung wie die Halteelemente 16, 17 aus den Figuren 3 und 4 auf Scherung belastet. Oberhalb einer vorgesehenen Belastungsstärke werden die Halteelemente 24, 25 abgeschert, so dass die Gleitbolzen 22, 23 in der Führung 20 entlanggleiten. Dabei gelangt das Formteil 21 in eine tiefere, in Figur 5 strichpunktiert dargestellten Lage.

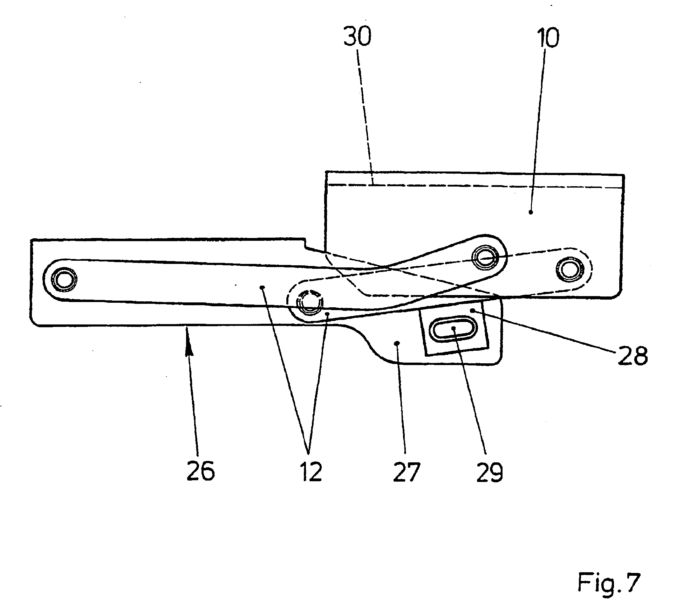

Figur 7 zeigt ein Scharnier 26 in einer Seitenansicht. Hierbei sind die Scharnierarme 12 unmittelbar auf einem Scharnierträger 27 gelagert. Die jeweils anderen Enden der Scharnierarme 12 sind an dem an der in Figur 1 dargestellten Haube 4 befestigten Halteblech 10 gelagert. Der Scharnierträger 27 hat einen Anschlag 28 zur Begrenzung des Schwenkbereichs einer der Scharnierarme 12. Der Anschlag 28 ist als separates Bauteil gestaltet und mittels eines Halteelementes 29 an dem Scharnierträger 27 befestigt. Oberhalb einer vorgesehenen Belastung des Anschlags 28 wird das Halteelement 29 von dem Scharnierträger 27 abgeschert. Hierdurch kann sich die in Figur 1 dargestellte Haube 4 vertikal nach unten bewegen. Das Halteblech 10 hat eine in Richtung des Scharnierträgers 27 weisende Abwinklung 30. Bei einer Trennung des Anschlags 28 von dem Scharnierträger 27 gelangt die Abwinklung 30 gegen den Scharnierträger 27. Die Abwinklung 30 bildet damit einen Anschlag zur Begrenzung der Bewegung der in Figur 1 dargestellten Haube 4.

## Patentansprüche

1. Vorderbau für ein Kraftfahrzeug mit einer schwenkbaren Haube, insbesondere einer Motorhaube, welche in einer geschlossenen Lage an der Karosserie anliegt, wobei die Haube (4) so gehalten ist, dass sie bei Überschreitung einer vorgesehenen Belastungsstärke bewegbar ist, wobei zumindest ein Teilbereich der geschlossenen Haube (4) oberhalb der vorgesehenen Belastungsstärke nur in vertikaler Richtung nach unten bewegbar ist, **gekennzeichnet durch** ein bei einer vorgesehenen Belastung abscherbares Halteelement (16, 17, 24, 25, 29) zur Lösung eines Formschlusses zwischen der Haube (4) und einem die Haube (4) halternden Karosserieteil (3) und einen Anschlag (18) zur Begrenzung der vertikalen Bewegung der Haube (4) bei einer Zerstörung des Halteelementes (16, 17, 29).

2. Vorderbau nach Anspruch 1, **dadurch gekennzeichnet, dass** das Halteelement im Bereich eines die Haube (4) an dem Karosserieteil (3) anlenkenden Scharniers (9, 19, 26) angeordnet ist.

3. Vorderbau nach Anspruch 2, **dadurch gekennzeichnet, dass** das Halteelement (16, 17, 24, 25, 29) zur Verbindung eines das Scharnier (9, 19, 26) halternden Scharnierträgers (7, 27) mit einem daran angrenzenden Bauteil gestaltet ist.

4. Vorderbau nach zumindest einem der vorhergehenden Ansprüche, **dadurch gekennzeichnet, dass** die von dem Halteelement (16, 17, 24, 25, 29) verbundenen Bauteile zueinander verschiebbar angeordnet sind und dass das Halteelement (16, 17, 24, 25, 29) quer zu der Verschiebungsrichtung angeordnet ist.

5. Vorderbau nach zumindest einem der vorhergehenden Ansprüche, **dadurch gekennzeichnet, dass** die Bewegung der Haube (4) nach einem Lösen des Formschlusses des Halteteils (16, 17, 24, 25, 29) an einem feststehenden Bauteil der Karosserie geführt ist.

6. Vorderbau nach zumindest einem der vorhergehenden Ansprüche, **dadurch gekennzeichnet, dass** eine Führung (8) der Haube (4) ein ein von dem Halteelement (16, 17) gehaltenes Formteil (21) seitlich umgreifendes Blechteil aufweist.

7. Vorderbau nach zumindest einem der vorhergehenden Ansprüche, **dadurch gekennzeichnet, dass** die Führung (20) hülsenförmig, zur Aufnahme von mittels des Halteelementes (24, 25) gehaltenen Gleitbolzen (22, 23) gestaltet ist.

8. Vorderbau nach zumindest einem der vorhergehenden Ansprüche 3 bis 7, **dadurch gekennzeichnet, dass** der Scharnierträger (27) an der Haube (4) angelenkte Scharnierarme (12) unmittelbar lagert und dass das Halteelement (29) zur Halterung des den Schwenkbereich der Scharnierarme (12) begrenzenden Anschlags (28) gestaltet ist.

## Claims

1. Front part for a motor vehicle with a pivotable bonnet, in particular an engine bonnet, which abuts against the vehicle body in a closed position, wherein the bonnet (4) is held in such a way that it is movable upon exceeding a predetermined degree of loading, wherein at least a portion of the closed bonnet (4) above the predetermined degree of loading is movable in a vertical direction downwards only, **characterised by** a holding element (16, 17, 24, 25, 29) which is shearable at a predetermined load for releasing a form locking between the bonnet (4) and a body part (3) supporting the bonnet (4) and a stop (18) for limiting the vertical movement of the bonnet (4) in case of destruction of the holding element (16, 17, 29).

2. Front part according to claim 1, **characterised in that** the holding element is arranged in the region of a hinge (9, 19, 26) linking the bonnet (4) to the body part (3).

3. Front part according to claim 2, **characterised in that** the holding element (16, 17, 24, 25, 29) is designed for the connection of a hinge carrier (7, 27) supporting the hinge (9, 19, 26), to a structural member adjoining it.

4. Front part according to at least one of the preceding claims, **characterised in that** the structural members connected by the holding element (16, 17, 24, 25, 29) are arranged displaceably relative to each other and **in that** the holding element (16, 17, 24, 25, 29) is arranged transversely to the direction of displacement.

5. Front part according to at least one of the preceding claims, **characterised in that** the movement of the bonnet (4) after a release of the form locking of the holding portion (16, 17, 24, 25, 29) is guided on a stationary structural member of the body.

6. Front part according to at least one of the preceding claims, **characterised in that** a guide (8) of the bonnet (4) comprises a sheet metal portion laterally embracing a shaped part (21) held by the holding element (16, 17).

7. Front part according to at least one of the preceding claims, **characterised in that** the guide (20) is sleeve-shaped for receiving sliding bolts (22, 23) held by means of the holding element (24, 25).

8. Front part according to at least one of the preceding claims 3 to 7, **characterised in that** the hinge carrier (27) directly mounts hinge arms (12) linked to the bonnet (4) and **in that** the holding element (29) is designed to support the stop (28) which limits the pivot range of the hinge arms (12).

## Revendications

1. Structure frontale pour un véhicule automobile comportant un capot pivotant, en particulier un capot de moteur, qui dans une position fermée repose sur la carrosserie, le capot (4) étant fixé de manière telle qu'il puisse se déplacer lorsqu'une intensité de sollicitation prédéterminée est dépassée, au moins une partie du capot (4) fermé, au-delà de l'intensité de sollicitation prévue, pouvant uniquement se déplacer verticalement vers le bas, **caractérisée par** un élément de retenue (16, 17, 24, 25, 29) qui peut être détruit en présence d'une sollicitation prédéterminée aux fins d'annuler une liaison par complémentarité de formes entre le capot (4) et un élément de carrosserie (3) tenant le capot (4) et par une butée (18) pour limiter le déplacement vertical du capot (4) dans le cas d'une destruction de l'élément de retenue (16, 17, 29).

2. Structure frontale selon la revendication 1, **caractérisée par le fait que** l'élément de retenue est disposé dans la région d'une charnière (9, 19, 26) reliant le capot (4) à l'élément de carrosserie (3).

3. Structure frontale selon la revendication 2, **caractérisée en ce que** l'élément de retenue (16, 17, 24, 25, 29) est conformé sur un composant adjacent pour relier un support de charnière (7, 27) portant la charnière (9, 19, 26).

4. Structure frontale selon au moins une des revendications précédentes, **caractérisée en ce que** les composants reliés par l'élément de retenue (16, 17, 24, 25, 29) sont montés avec possibilité de coulissement les uns par rapport aux autres et **en ce que** l'élément de retenue (16, 17, 24,25, 29) est disposé transversalement à la direction de coulissement.

5. Structure frontale selon au moins une des revendications précédentes, **caractérisée en ce que** le déplacement du capot (4) après une annulation de la liaison par complémentarité de formes de l'élément de retenue (16, 17, 24, 25, 29) est guidé sur un composant stationnaire de la carrosserie.

6. Structure frontale selon au moins une des revendications précédentes, **caractérisée en ce qu'**une glissière (8) du capot (4) comprend une pièce façonnée (21) en tôle, enveloppante latéralement, qui est tenue par l'élément de retenue (16, 17).

7. Structure frontale selon au moins une des revendications précédentes, **caractérisée en ce que** la glissière (20) est conformée en manchon recevant des axes coulissants (22, 23) tenus à l'aide de l'élément de retenue (24, 25).

8. Structure frontale selon au moins une des revendications 3 à 7, **caractérisée en ce que** le support de charnière (27) porte directement des bras de charnière (12) articulés sur le capot (4) et **en ce que** l'élément de retenue (29) est agencé pour porter la butée (28) limitant le mouvement de pivotement des bras de charnière (12).
